## Europäisches Patentamt

**European Patent Office**

**Office européen des brevets**

(11) Publication number: **0 105 933**
**B2**

(12) NEW EUROPEAN PATENT SPECIFICATION

(45) Date of publication of the new patent specification: **19.12.90**

(21) Application number: **83901232.5**

(22) Date of filing: **23.04.83**

(86) International application number:
**PCT/JP83/00128**

(87) International publication number:
**WO 83/03875 10.11.83 Gazette 83/26**

(51) Int. Cl.⁵: **F 02 B 23/06**

(54) COMBUSTION CHAMBER OF DIESEL ENGINE.

(30) Priority: **23.04.82 JP 68435/82**
**23.04.82 JP 68436/82**
**30.04.82 JP 73772/82**

(43) Date of publication of application:
**25.04.84 Bulletin 84/17**

(45) Publication of the grant of the patent:
**16.09.87 Bulletin 87/38**

(45) Mention of the opposition decision:
**19.12.90 Bulletin 90/51**

(84) Designated Contracting States:
**AT BE CH DE FR GB LI NL SE**

(56) References cited:
**DE-A-1 451 636**
**DE-A-2 407 783**
**DE-A-2 739 419**
**DE-A-2 753 341**
**GB-A- 967 126**
**JP-A-51 119 412**
**JP-U-54 051 205**
**JP-U-56 002 020**
**JP-U-56 171 625**
**JP-U-58 002 351**
**US-A-3 302 627**

(73) Proprietor: **HINO JIDOSHA KOGYO KABUSHIKI KAISHA**
**1-1, Hinodai 3-chome**
**Hino-shi Tokyo 191 (JP)**

(72) Inventor: **TSURUOKA, Shingo**
**Hino Jidosha Kogyo K.K.**
**1-1 Hinodai 3-chome Hino-shi Tokyo 191 (JP)**

(74) Representative: **Goddar, Heinz J., Dr. et al**
**FORRESTER & BOEHMERT Widenmayerstrasse 4/I**
**D-8000 München 22 (DE)**

Courier Press, Leamington Spa, England.

## Description

The present invention relates to a combustion chamber as defined in the preamble of claim 1.

Such a diesel engine is known from DE—A—24 07 783.

It is the object of the present invention to provide a combustion chamber in a diesel engine of the type mentioned above which insures a good swirl of the injected atomised fuel througout the entire chamber.

This object is solved by the characterising features of claim 1. A curved inner wall surface against which said streams of atomised fuel injected from said nozzle collides is per se known form GB—A—967 126.

The subclaims are preferred manners of execution of the invented combustion chamber.

The following is a sescription of the invention illustrated with a drawing, in which

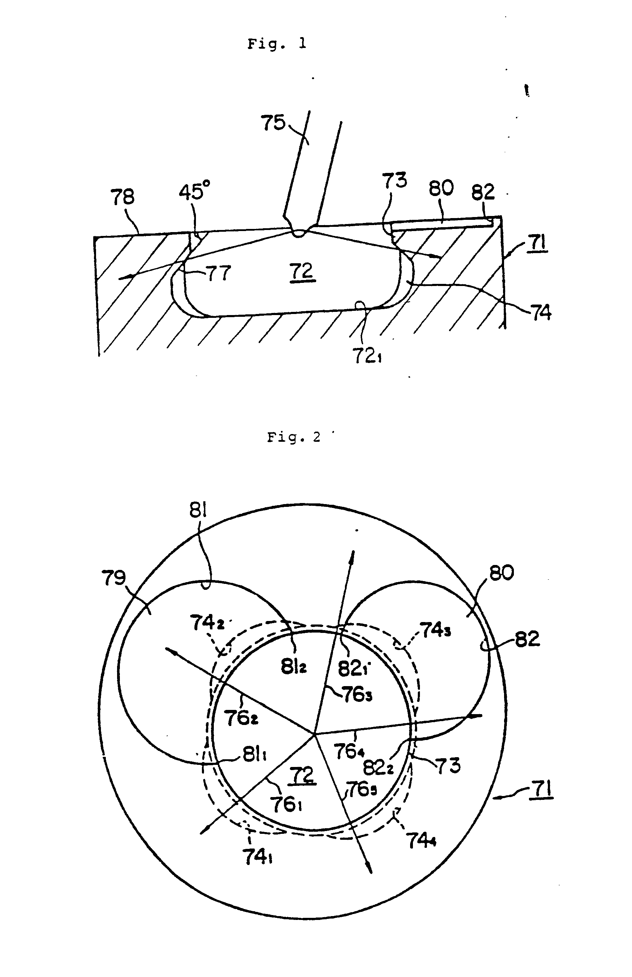

Fig. 1 is a cross-sectional view of the top of the piston, and

Fig. 2 is a plan view of the piston shown in Fig. 15.

A combustion chamber 72 is defined by a cavity $72_1$ in a top surface of a piston 71. There is a restriction 73 at an inlet of the combustion chamber 72 at an upper edge thereof. The cavity $72_1$ has a side surface with four recesses $74_1$—$74_4$ defined therein. The side surface of the cavity $72_1$ which is free of the recesses $74_1$—$74_4$ constitutes a circle extending around the center of the combustion chamber 72.

A nozzle 75 injects five streams of atomized fuel $76_1$—$76_5$ into the cavity $72_1$. An inner wall surface 77 of the cavity $72_1$ against which the five fuel cones $76_1$—$76_5$ collide is inclined at 45° with respect to a top surface 78 of the piston 71.

The fuel streams $76_1$—$76_5$ are directed to hit the side surface of the cavity $72_1$ at various positions. The piston top surface 78 has an intake valve clearance 79 and an exhaust valve clearance 80. The intake valve clearance 79 has a stepped portion 81 intersecting the inlet of the combustion chamber 72 at points $81_1$, $82_2$ positioned at areas where the recess $74_1$ or $74_2$ are not deep or are shallow. The exhaust valve clearance 80 has a stepped portion 82 intersecting the inlet of the combustion chamber at points $82_1$, $82_2$ at areas where there are no recess $74_1$—$74_4$.

The recesses 74 are defined in plural locations on the side surface and contiguous to the side surface. The side surface is left at least as surfaces (side surfaces) between adjacent recesses 74. Each recess 74 is defined by a curved surface having a radius of curvature smaller than that of the curved surface which defines the side surface of the chamber 72. The recesses 74 and the side surfaces are rendered contiguous smoothly to each other by accurately ground junctions. It is necessary however to provide the side surfaces left between the adjacent recesses 74. With the recesses 74, the width of the restriction 73 is partly increased. The number of the recesses 74 varies with the size of the combustion chamber 72. The number of the recesses 74 is unequal to the number of the injection ports. In the shown example there is one more injection port in the fuel nozzle 24 than receses 74 for varying the shapes of areas where the streams of fuel injected from the injection ports hit the side surface of the chamber 72.

With the foregoing construction streams of fuel 76 injected from the fuel nozzle 45 are mixed with air while they are caused to flow by the swirl and partly hit the side surface of the chamber 72 and then are splashed back toward the center of the chamber 72. Where the number of the injection ports in the fuel nozzle 75 is different from the number of recesses 74, for example, where the recesses 74 are one fewer than the injection ports in the fuel nozzle 75 with the recesses and injection ports being equally angularly spaced, the injected fuel streams from the injection ports hit the cavity surfaces under different conditions to change the property of the air-fuel mixture.

This allows the property of the air-fuel mixture to be ideal in at least one location under varied engine operating conditions, resulting in reliable ignition is reduced for smooth fuel combustion under any engine operating conditions.

The recesses 74 permit the length of the restriction 73 to be partly increased thus generating sufficient squishing streams for increased combustion efficiency. The recesses 74 also make the inner surface of the combustion chamber smoothly concave and convex, a structure which causes the swirl to produce localized vortices (small vortices) which promote evaporation of fuel attached to the side surface of the combustion chamber, thus reducing the time required for combustion. Since sufficiently strong squishing streams can be created without having to increase the overall size of the restriction, the flame confined temporarily, in the combustion chamber by the restriction is introduced into the squishing area at a suitable time. This suppresses the production of exhaust gas components and increases the rate of air utilization, for thereby improving the density of discharged smoke and the rate of fuel consumption. The surfaces of the chamber 72 are left as surfaces between the recesses 74 to make a combustion chamber shape which is advantageous from the standpoint of a thermal load.

With the foregoing embodiment of the invention, strong squishing streams can be produced without having to enlarge the restriction, the swirl produced in the combustion chamber is effective in inducing localized vortices (disturbances) for improving the mixture between air and fuel, and the period of time in which the flames are confined is prevented from being excessively long. The production of exhaust gas components can therefore be suppressed without delaying the time of fuel injection, and the combustion efficiency can be increased to improve the rate of fuel combustion and the density of discharged smoke. With no edges or corners on the inner surface of the combustion chamber there are no heat spots and at the same time the discharged amount of unburned fuel due to incomplete combustion can be reduced.

The lower surface of the restriction 73 provided to obtain strong squishing streams is inclined substantially at 45° with respect to the top surface 78 of the piston 71 to form the surface of collision with atomized fuel, reduced the amount of floating atomized fuel due to splasing from the side wall. Therefore, vaporized fuel combustion with a reduced combustion in the first period is carried out to thereby improve exhaust characteristics and noise. The swirl strengthened by the restriction 73 is oscillated by the recesses 74 in the side wall in a direction substantially perpendicular to the direction in which fuel swirls, thus inducing small vortices in the vicinity of the side wall which serve to separate a thin film of fuel from the wall surface for promoted fuel vaporization. This activates dispersed fuel combustion to reduce the period required for combustion, thereby enabling the engine to produce a high output and improving the rate of fuel consumption. Sluggish engine starting operation and incomplete combustion during operation under light (no) loads can also be improved which would be caused by conventional combustion chambers of the vaporized fuel type.

**Claims**

1. A combustion chamber (72) in a diesel engine defined in a top surface (78) of a piston (71) and having a plurality of recesses ($74_1$, $74_2$, $74_3$, $74_4$) in a side surface, to which atomised streams of fuel ($76_1$, $76_2$, $76_3$, $76_4$, $76_5$) are injected from the injections ports of a fuel nozzle H(75) said fuel streams being directed toward different wall portions of the recesses, such as deep portions of the recesses, and portions free of the recesses, thereby injecting streams of atomised fuel ($76_1$, $76_2$, $76_3$, $76_4$, $76_5$) at equal angular intervals toward different wall portions of the recesses ($74_1$, $74_2$, $74_3$, $74_4$), and the surface of said fuel surface against which said streams of atomised fuel ($76_1$, $76_2$, $76_3$, $76_4$, $76_5$) injected from said fuel nozzle (75) collide, is an inclined inner wall surface (77), characterised in that the number of recesses ($74_1$, $74_2$, $74_3$, $74_4$) is different from the number of the injection ports by one, and the angle between said top surface (78) of the piston (71) and said inclined inner wall surface (77) is 45°.

2. A combustion chamber in a diesel engine according to claim 1, characterized in that the number of said recess ($74_1$, $74_2$, $74_3$, $74_5$) exceeds the number of said injection ports by one.

3. A combustion chamber in a diesel engine according to claim 1, characterized in that the number of said recesses ($74_1$, $74_2$, $74_3$, $74_5$) is one less than the number of said injection ports.

4. A combustion chamber in a diesel engine according to any one of claims 1 through 3, characterized by a restriction (73) provided at the inlet at an upper end of said combustion chamber (72).

5. A combustion chamber in a diesel engine according to any one of claims 1 through 4, characterized in that said top surface (78) of the piston (71) has at least one valve clearance (80) defined therein for an exhaust valve and having a stepped portion (82) intersecting said restriction (73) of the combustion chamber (72) at areas free of said recesses ($74_1$, $74_2$, $74_3$, $74_4$) in said side surface or at areas where said recesses ($74_1$, $74_2$, $74_3$, $74_4$), are shallow.

6. A combustion chamber in a diesel engine according to claim 6, characterized in that said top surface (78) of the piston (71) has a second valve clearance (79) defined therein for an intake valve and having a stepped portion (81) intersecting said restriction (73) of the combustion chamber (72) at areas free of said ($74_1$, $74_2$, $74_3$, $74_5$) in said side surface or at areas where said recesses ($74_1$, $74_2$, $74_3$, $74_4$) are shallow.

**Patentansprüche**

1. Verbrennungskammer (72) in einer Dieselmaschine, die durch die Oberfläche (78) eines Kolbens (71) begrenzt wird und eine Vielzahl von Ausnehmungen ($74_1$, $74_2$, $74_3$, $74_4$) in einer Seitenfläche aufweist, in die Spruhströme des Brennstoffs ($76_1$, $76_2$, $76_3$, $76_4$, $76_5$) von den Einspritzöffnungen einer Brennstoffdüse (75) eingespritzt werden, wobei die Brennstoffströme gegen unterschiedliche Wandabschnitte der Ausnehmungen gerichtet sind, wie tiefe Abschnitte der Ausnehmungen, und gegen Abschnitte, die von Ausnehmungen frei sind, wodurch Ströme von gesprühtem Brennstoff ($76_1$, $76_2$, $76_3$, $76_4$, $76_5$) mit gleichem Winkelabstand gegen unterschiedliche Wandabschnitte der Ausnehmungen ($74_1$, $74_2$, $74_3$, $74_4$) eingespritzt werden, und die Oberfläche der Seitenflächen, gegen die die Ströme gesprühten Brennstoffes ($76_1$, $76_2$, $76_3$, $76_4$, $76_5$), die von der Einspritzdüse (75) eingespritzt werden, auftreffen, eine geneigte innere Wandfläche ist, dadurch gekennzeichnet daß die Anzahl der Ausnehmungen ($74_1$, $74_2$, $74_3$, $74_4$) sich von der Anzahl der Einspritzöffnungen um eine unterscheidet, und daß der Winkel zwischen der Oberfläche (78) des Kolbens (71) und der geneigten inneren Wandfläche (77) 45° beträgt.

2. Verbrennungskammer in einer Dieselmaschine nach Anspruch 1, dadurch gekennzeichnet, daß die Anzahl der Ausnehmungen ($74_1$, $74_2$, $74_3$, $74_4$) die Anzahl der Einspritzöffnungen um eins übersteigt.

3. Verbrennungskammer in einer Dieselmaschine nach Anspruch 1, dadurch gekennzeichnet, daß die Anzayl der Ausnehmungen ($74_1$, $74_2$, $74_3$, $74_4$) um eins geringer ist als die Anzahl der Einspritzöffnungen.

4. Verbrennungskammer in einer Dieselmaschine nach einem der Ansprüche 1 bis 3, gekennzeichnet durch eine Verengung (73), die an dem Einlaß an einem oberen Ende der Verbrennungskammer (72) angeordnet ist.

5. Verbrennungskammer in einer Dieselmaschine nach einem der Ansprüche 1 bis 4, dadurch gekennzeichnet, daß die Oberfläche (78) des Kolbens (71) wenigstens ein Ventilspiel (80) aufweist für ein Auslaßventil und mit einem abgestuften Abschnitt (82) versehen ist, der die Verengung (73) der Verbrennungskammer (72) unterbricht in Bereichen, der frei von den Ausnehmungen (74₁, 74₂, 74₃, 74₄) in der Seitenfläche ist oder aber in Gebieten, wo die Ausnehmungen (74₁, 74₂, 74₃, 74₅) flach sind.

6. Verbrennungskammer in einer Dieselmaschine nach Anspruch 5, dadurch gekennzeichnet, daß die Oberfläche (78) des Kolbens (71) ein zweites Ventilspiel (79) aufweist für ein Einlaßventil und mit einem gestuften Abschnitt (81), der die Verengung (73) der Verbrennungskammer (72) unterbricht in Bereichen, der frei von den Ausnehmungen (74₁, 74₂, 74₃, 74₄) in der Seitenfläche ist oder aber in Bereichen wo die Ausnehmungen (74₁, 74₂, 74₃, 74₄) flach sind.

**Revendications**

1. Chambre de combustion (72) dans un moteur diesel, ménagée dans une surface supérieure (78) d'un piston (7) et présentant une pluralité d'évidements (74₁, 74₂, 74₃, 74₄) dans une surface latérale, vers laquelle sont injectés des courants atomisés de combustible (76₁, 76₂, 76₃, 76₄, 76₅) provenant des orifices d'injection d'un injecteur (75), lesdits courants de combustible étant dirigés vers différentes portions de paroi des évidements, telles que portions profondes des évidements, des portions dépourvues d'évidements, de façon à injecter des courants de combustible atomisé (76₁, 76₂, 76₃, 76₄, 76₅) à intervalles angulaires égaux vers différentes portions de paroi des évidements (74₁, 74₂, 74₃, 74₄) et la surface de ladite surface latérale contre laquelle frappent lesdits courants de combustible atomisé (76₁, 76₂, 76₃, 76₄, 76₅) injectés par ledit injecteur (75) est une surface de paroi intérieure (77), caractérisée par le fait que le nombre d'évidements (74₁, 74₂, 74₃, 74₄) diffère de un du nombre d'orifices d'injection et l'angle compris entre ladite surface de dessus (78) du piston (71) et ladite surface de paroi supérieure inclinée (77) est de 45 degrés.

2. Chambre de combustion dans un moteur diesel selon la revendication 1, caractérisée par le fait que le nombre des dits évidement (74₁, 74₂, 74₃, 74₄) excède de un le nombre des dits orifices d'injection.

3. Chambre de combustion dans un moteur diesel selon la revendication 1, caractérisée par le fait que le nombre des dits évidements (74₁, 74₂, 74₃, 74₄) est inférieur de un au nombre des dits orifices d'injection.

4. Chambre de combustion dans un moteur diesel selon l'une des revendications 1 à 3, caractérisée par le fait qu'il est prévu un resserrement (73) à l'entrée, à une extrémité supérieure de ladite chambre de combustion (72).

5. Chambre de combustion dans un moteur diesel selon l'une des revendications 1 à 4, caractérisée par le fait que ladite surface supérieure (78) du piston (71) comporte au moins un espace libre (80) ménagé pour une soupape d'échappement et présentant une portion à gradin (82) rencontrant ledit resserrement (73) de la chambre de combustion (72) sur des zones libres desdits évidements (74₁, 74₂, 74₃, 74₄) dans ladite surface latérale ou sur des zones où lesdits évidements (74₁, 74₂, 74₃, 74₄) sont peu profonds.

6. Chambre de combustion dans un moteur diesel selon la revendication 5, caractérisée par le fait que ladite surface supérieure (78) du piston (71) comporte un second espace libre (79) ménagé pour une soupape d'admission et présentant une portion à gradin (81) rencontrant ledit resserrement (73) de la chambre de combustion (72) sur des zones libres desdits évidements (74₁, 74₂, 74₃, 74₄) dans ladite surface latérale ou sur des zones où lesdits évidements (74₁, 74₂, 74₃, 74₄) sont peu profonds.

Fig. 1

Fig. 2